# EUROPÄISCHE PATENTSCHRIFT

(11) **EP 2 639 111 B1**
(45) Veröffentlichungstag und Bekanntmachung des Hinweises auf die Patenterteilung: **29.07.2015**
(21) Anmeldenummer: 12075026.0
(22) Anmeldetag: 14.03.2012
(51) Int. Cl.: B60R 1/074

(54) **Vorrichtung zum Verbinden eines Außenrückspiegels**
Device for connecting an external rear view mirror
Dispositif pour connecter un rétroviseur extérieur

(43) Veröffentlichungstag der Anmeldung: 18.09.2013
(73) Patentinhaber: Magna Auteca AG, 8160 Krottendorf/Weiz (AT)
(72) Erfinder: Palvoelgyi, Martin, 8010 Graz (AT); Schadler, Bernhard, 8211 Oberrettenbach (AT)
(74) Vertreter: Rausch, Gabriele

(56) Entgegenhaltungen:
- WO-A1-02/076790
- WO-A1-03/037680
- US-A1- 2002 075 578

## Beschreibung

Die Erfindung betrifft eine Vorrichtung zum Einstellen eines Spiegelkopfes eines Außenrückspiegels für ein Fahrzeug relativ zu einem mit dem Fahrzeug verbundenen Spiegelfuß.

Üblicherweise weist ein Außenrückspiegel für ein Kraftfahrzeug einen Spiegelkopf, der das Spiegelglas trägt, und einen Spiegelfuß auf, der mit dem Kraftfahrzeug verbunden ist. In einem solchen Fahrzeugaußenspiegel sind Komponenten zum Einstellen bzw. Positionieren des Spiegelkopfs relativ zu dem Spiegelfuß angeordnet, wobei die Komponenten zu einer mechanischen Kupplung oder auch zu einem integrierten elektrischen Antrieb gehören können. Beide Ausführungen gestatten eine Ausrichtung des Spiegels in eine Fahrstellung und Einklappen des Spiegels in eine Parkstellung.

Ein solcher mechanischer Spiegel oder Spiegel mit elektrischem Antrieb umfasst einen beweglichen Teil und einen feststehenden Teil, wobei der bewegliche Teil mit dem Spiegelkopf und der feststehende Teil mit dem Spiegelfuß verbindbar sind oder letzterer Bestandteil des Spiegelfußes ist. Um den Spiegelkopf am Spiegelfuß bzw. an dem dafür vorgesehenen festen Bereich am Kraftfahrzeug, der als Spiegelfuß dient, zu befestigen, ist es bekannt, eine Bajonettverbindung zu verwenden.

Die WO 2007/085960 A2 beschreibt einen Fahrzeug-Außenrückspiegel, bei dem ein Spiegelkopfgehäuse einen Hals mit Durchgang aufweist, wobei in den Hals ein Adapter einsetzbar ist, der mit entsprechenden Elementen im Hals mit diesem, d.h. mit dem Gehäuse eine formschlüssige Verbindung in einer speziellen Orientierung eingehen kann. Weiterer Bestandteil ist ein Trägerblech, das Durchgänge für einen Teil des Adapters aufweist. Ein Kupplungsschaft ist ausgebildet, um die verschiedenen Durchgänge des Gehäuses, des Adapters und des Trägerblechs zu durchgreifen, wobei eine den Schaft umgebende Druckfeder die Möglichkeit der Vorspannung der Teile untereinander liefert. An dem Adapter, dem Schaft und dem Hals sind verschiedene Elemente vorgesehen, die als Anschlagflächen dienen können, wobei zwischen Trägerblech und Schaft eine Bajonettverbindung herstellbar ist, mittels derer die verschiedenen Teile zusammengehalten werden. Der Aufbau eines solchen Spiegels bzw. die Mittel zur Herstellung der Bajonettverbindung sind komplex und es ist ein relativ großer konstruktiver Aufwand notwendig.

Aus der US20020075578 ist ein Türbrüstungsspiegel nach dem Oberbegriff von Anspruch 1 bekannt, der eine verschwenkbare Befestigung des Spiegelkopfes am Spiegelfuß beschreibt. Dabei wird zur Montage des Spiegelkopfes ein Bajonettverschluss verwendet. Eine einfache Führung der Bauteile gegeneinander ist dabei nicht vorgesehen, so dass die Montage aufwändig ist.
Aus der WO 03037680A1 ist ebenfalls eine Verbindung zwischen Spiegelkopf und Spiegelfuß als Bajonettlösung bekannt.
Der Erfindung liegt die Aufgabe zugrunde, eine Vorrichtung zum Einstellen eines Spiegelkopfes eines Außenrückspiegels ßenrückspiegels für ein Fahrzeug relativ zu einem mit dem Fahrzeug verbundenen Spiegelfuß herzustellen, die relativ einfach aufgebaut ist und eine einfache und spielfreie Montage mit einer genauen Winkelausrichtung und Höhenausrichtung des feststehenden Teils zum beweglichen Teil gestattet.

Diese Aufgabe wird erfindungsgemäß durch die Merkmale des Hauptanspruchs gelöst.

Durch die in den Unteransprüchen angegebenen Maßnahmen sind vorteilhafte Weiterbildungen und Verbesserungen möglich.

Erfindungsgemäß umfasst die Vorrichtung zum Einstellen eines Spiegelkopfes relativ zu einem Spiegelfuß einen mit dem Spiegelfuß verbundenen feststehenden Teil und einen mit dem Spiegelkopf verbindbaren und um eine Drehachse beweglichen Teil, wobei die Drehachse von einer den beweglichen Teil durchgreifenden Hülse gebildet ist, die an ihrem dem feststehenden Teil zugeordneten Ende mindestens ein Verriegelungselement aufweist. Weiterhin umfasst die erfindungsgemäße Vorrichtung eine Druckfeder, die den feststehenden Teil und den beweglichen gegeneinander vorspannt. Der bewegliche Teil weist darüberhinaus mindestens einen von einer Auflagefläche zum Abstützen auf dem feststehenden Teil hervorspringenden Ansatz auf, der im zusammengefügten Zustand in eine Öffnung mit Innenkontur des feststehenden Teils eingreift. Das mindestens eine Verriegelungselement der Hülse und die Innenkontur des feststehenden Teils derart ausgebildet sind, dass im zusammengefügten Zustand die Druckfeder über das Verriegelungselement sowohl eine axiale als auch eine tangentiale Kraftkomponente erzeugt, die den beweglichen Teil gegen Anschlagsflächen des feststehenden Teils einerseits zur Bestimmung der Höhe und andererseits zur Bestimmung der Winkelausrichtung des beweglichen und des feststehenden Teils zueinander drücken.

Durch die erfindungsgemäßen Merkmale ist es möglich, eine spielfreie Bajonettverbindung zwischen beweglichem Teil, feststehenden Teil und Hülse zur Verfügung zu stellen, die eine hohe Winkelgenauigkeit zwischen den zu verbindenden Teilen erlaubt. Auch ergibt sich eine hohe Genauigkeit der Verbindungshöhe. Eine solche erfindungsgemäße Vorrichtung zum Einstellen eines Spiegelkopfes relativ zu einem Spiegelfuß ist zum Stand der Technik gesehen einfach in ihrem Aufbau und weist eine reduzierte Menge von Teilen auf.

In einem bevorzugten Ausführungsbeispiel sind der bewegliche Teil und die Hülse mit korrespondierenden Positionierelementen ausgerüstet, die eine definierte Position des beweglichen Teils und der Hülse zueinander als Auslieferungsstellung vorgeben. Dadurch, dass der bewegliche Teil und die Hülse korrespondierende Positionselemente umfassen, lassen sich Hülse und beweglicher Teil in eine so genannte Auslieferstellung vormontieren, was die Montage beim Zusammenfügen erheblich erleichtert.

Bei einer weiteren bevorzugten Ausführungsform weisen der bewegliche Teil und der feststehende Teil Mittel zur Vorpositionierung einer Anordnung aus beweglichem Teil und Hülse in der definierten Position und des feststehenden Teils zueinander beim Zusammenfügen auf. Dadurch gestatten die Mittel zur Vorpositionierung des beweglichen zum feststehenden Teil nur eine bestimmte Anordnung der beiden Teile zueinander, so dass keine Montagefehler auftreten können.

Vorzugsweise weist die Innenkontur des feststehenden Teils mindestens einen radial nach innen vorspringenden Bereich auf und der bewegliche Teil besitzt mindestens einen von einer Auflagefläche zum Abstützen auf dem feststehenden Teil hervorspringenden Ansatz, wobei im zusammengefügten Zustand der Ansatz in den nicht vorspringenden Bereich der Innenkontur des feststehenden Teils eingreift. Das Verriegelungselement ist ebenfalls in dem nicht vorspringenden Bereich der Innenkontur im zusammengefügten Zustand angeordnet, wobei es sich einerseits am Ansatz des beweglichen Teils und andererseits am vorspringenden Bereich der Innenkontur abstützt. Durch das Zusammenspiel der Formen kann eine spielfreie Anordnung und Verbindung zwischen feststehendem und beweglichem Teil erreicht werden.

Dadurch, dass in einem weiteren Ausführungsbeispiel das Verriegelungselement eine in Bezug auf die Drehachse geneigte Abstützfläche und die Innenkontur bzw. der vorspringende Bereich des feststehenden Teils eine korrespondierende geneigte Abstützfläche aufweisen, kann in einfacher Weise eine tangentiale und axiale Kraftkomponente zwischen dem beweglichen und dem feststehenden Teil erzeugt werden, wodurch der Ansatz des mobilen Teils spielfrei an den vorspringenden Bereich des feststehenden Teils für eine genaue Winkelausrichtung gedrückt wird. Weiterhin wird der mobile Teil axial durch die Wirkung der Druckfeder und die Übertragungsflächen an dem festen Teil als Höhenanschlagfläche gedrückt.

In bevorzugter Weise weist die Innenkontur des feststehenden Teils mehrere, vorzugsweise drei nach innen hervorspringende Nasen und der bewegliche Teil mehrere, vorzugsweise drei Ansätze auf, wobei die Ansätze zwischen den Nasen angeordnet sind und in einem jeweiligen Freiraum zwischen Ansätzen und Nasen jeweils ein Verriegelungselement angeordnet ist, das einerseits an einer an den Nasen vorgesehenen geneigten Abstützfläche und andererseits an dem Ansatz anliegt. Eine solche Anordnung mit mehreren korrespondierenden Komponenten, wie Nasen, Ansätzen und Verriegelungselementen verbessern die Qualität der Bajonettverbindung.

Erfindungsgemäß umgreift die Druckfeder die Hülse, wobei sie sich zwischen einer mit der Hülse verbundenen Ringfläche und dem beweglichen Teil abstützt. Dadurch wird eine gute Übertragung der Kräfte gewährleistet.

In einem Ausführungsbeispiel sind die Mittel zur Vorpositionierung der Anordnung aus beweglichem Teil und Hülse in der Auslieferstellung und des feststehenden Teils, die das Zusammenfügen der Komponenten erleichtern, als an dem mindestens einen Ansatz des beweglichen Teils und an der Innenkontur des feststehenden Teils axial angeordnete Führungserhöhungen und Führungsvertiefungen ausgebildet, wodurch das Zusammenfügen erleichtert wird bzw. nur in der vorgegebenen Position ermöglicht wird. Vorzugsweise sind die Mittel zur Vorpositionierung als an dem Ansatz des beweglichen Teils und an der Innenkontur des feststehenden Teils angeordnete Rippe und Rille ausgebildet, wobei die korrespondierenden Komponenten, Rippe und Rille, in Bezug auf Ansatz und Innenkontur austauschbar sind.

Bei einem vorteilhaften Ausführungsbeispiel weisen die korrespondierenden Positionierelemente, die ein Zusammenfügen des beweglichen Teils und der Hülse in einer Auslieferstellung gestatten, eine am beweglichen Teil und an der Hülse angeordnete Eingreiferhöhung und Eingreifvertiefung auf. Dadurch kann ähnlich einer Rastverbindung eine definierte Position zwischen den Komponenten zur Verfügung gestellt werden. Ähnlich den Mitteln zur Vorpositionierung sind die Erhöhung und die Vertiefung in Bezug auf den beweglichen Teil und die Hülse austauschbar. Vorzugsweise sind die Eingreiferhöhung und die Eingreifvertiefung an dem Ansatz des beweglichen Teils und an dem Verriegelungselement der Hülse angeordnet, wodurch sich eine einfache Positionierung ergibt. Die Vertiefung, in die die Erhöhung eingreift, kann auch als Durchgangsloch oder Ausnehmung ausgebildet sein.

Für eine einfache und sichere Herstellung der Bajonettverbindung ist nach dem Vorpositionieren der Anordnung aus beweglichem Teil und Hülse in der Auslieferstellung in Bezug auf den feststehenden Teil das mindestens eine Verriegelungselement nach Lösen der Eingreifstellung der Positionierelemente des beweglichen Teils und der Hülse voneinander in den Freiraum zwischen beweglichem und feststehendem Teil bringbar, wobei dies durch Rotation der Hülse durchgeführt wird. Somit ist die Montage des beweglichen Teils und des feststehenden Teils in den zusammengefügten Zustand sehr einfach und es kann zu keiner Fehlpositionierung kommen. Dabei sind die von der Druckfeder ausgeübte Kraft und die Kraft, die zum Lösen der Eingreifposition der Positionierelemente überwunden werden muss, so bemessen, dass der bewegliche Teil und die Hülse in der Auslieferstellung sicher gehalten werden, die Verbindung aber durch Rotation der Hülse ohne übermäßigen Widerstand gelöst wird.

In vorteilhafter Weise weist der vorspringende Bereich bzw. die jeweilige Nase der Innenkontur eine sich an die geneigte Abstützfläche anschließende Stufe auf, die ein Lösen der Verbindung zwischen feststehendem und beweglichem Teil im zusammengefügten Zustand verhindert, wenn ein Drehmoment auf die Hülse bzw. auf die Teile im zusammengefügten Zustand aufgebracht wird. Eine Demontage des beweglichen Teils vom feststehenden Teil bzw. ein Lösen der Bajonettverbindung ist nur dann möglich, wenn die Hülse gegen die Kraft der Druckfeder gedrückt und dann verdreht wird, bis die Hülse wieder die Auslieferstellung bzw. annähernd die Auslieferstellung erreicht.

Besonders bevorzugt ist, dass der bewegliche Teil wahlweise ein Gehäuse aufweist, in dem ein elektrischer Antrieb aufgenommen ist, oder als Träger für einen Spiegelkopf mit mechanischer Kupplung ausgebildet ist. Dies bedeutet, dass die erfindungsgemäße Vorrichtung sowohl in Zusammenhang mit einem elektrischen Antrieb als auch mit einem mechanischen Spiegel verwendet werden kann.

Ein Ausführungsbeispiel der Erfindung ist in der Zeichnung dargestellt und wird in der nachfolgenden Beschreibung näher erläutert. Es zeigen
- Fig. 1: eine perspektivische Ansicht von Einzelteilen der erfindungsgemäßen Vorrichtung,
- Fig. 2: eine perspektivische Ansicht des beweglichen Teils der erfindungsgemäßen Vorrichtung von unten,
- Fig. 3: eine perspektivische Ansicht auf den feststehenden Teil,
- Fig. 4: eine perspektivische Ansicht der Anordnung aus beweglichem Teil und Hülse mit Druckfeder in der Auslieferstellung,
- Fig. 5: eine schematische Abwicklung der erfindungsgemäßen Vorrichtung vor dem Zusammenfügen,
- Fig. 6: eine schematische Abwicklung der erfindungsgemäßen Vorrichtung in der Vorpositionierung und
- Fig. 7: eine schematische Abwicklung der erfindungsgemäßen Vorrichtung im zusammengefügten Zustand.

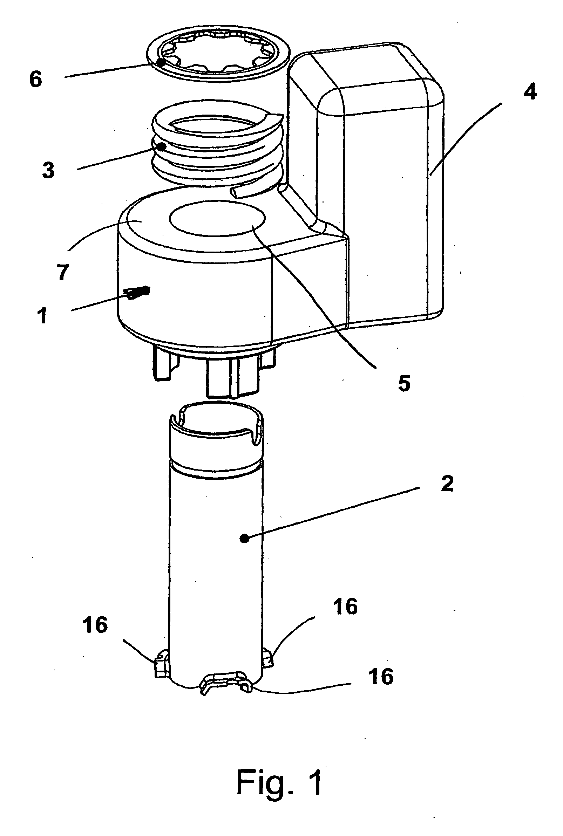

In Fig. 1 sind Bestandteile der erfindungsgemäßen Vorrichtung dargestellt, die einen beweglichen Teil 1 eine Hülse 2, die auch als Bajonetthülse bezeichnet werden kann, und eine Druckfeder 3 aufweist. Der bewegliche Teil 1 umfasst ein Gehäuse 4, das Teile für einen elektrischen Antrieb aufnehmen kann, mit dem der bewegliche Teil 1 relativ zu dem weiter unten beschriebenen feststehenden Teil 10 bewegt werden kann. Im Falle eines mechanischen Spiegels besteht der bewegliche Teil 1 hauptsächlich aus einem Träger für einen Spiegelkopf, der auch Bestandteile der Sicherheitskupplung eines mechanischen Spiegels beinhaltet. Der mobile Teil 1 ist mit einem nicht dargestellten Spiegelkopf eines Außenspiegels für Kraftfahrzeuge zu verbinden, in dem auch das Spiegelglas aufgenommen ist.

In dem beweglichen Teil 1 ist eine Durchgangsöffnung 5 vorgesehen, die ausgebildet ist, von der Hülse 2 durchgriffen zu werden, wobei dann die Druckfeder 3 die Hülse 2 umgibt. In dem von dem beweglichen Teil 1 abgewandten Ende der Hülse 2 ist eine Nut für die Festlegung einer Federmutter 6 eingearbeitet, wobei die Druckfeder 3 zwischen Federmutter 6 und einer Stützfläche 7 des beweglichen Teils 1 für die Auflage der Druckfeder 3 gespannt ist.

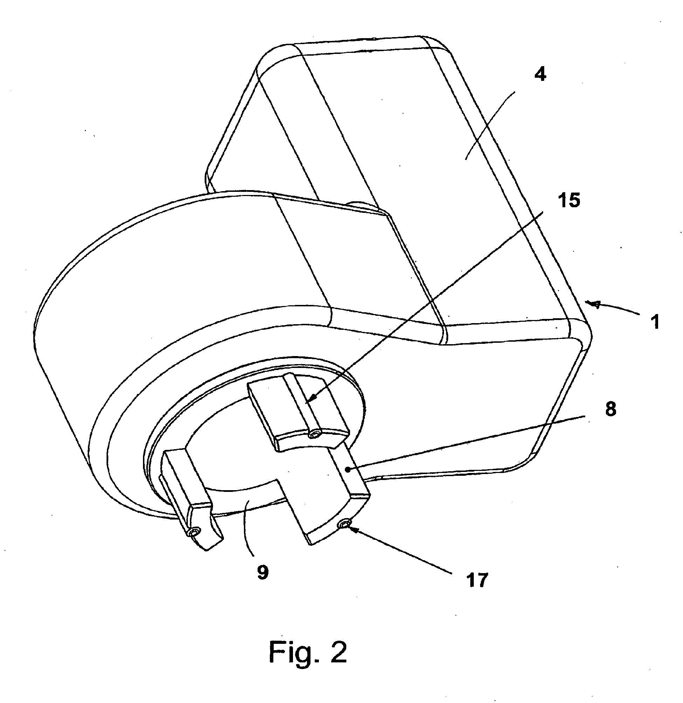

Wie aus Fig. 1 und Fig. 2 zu erkennen ist, weist der bewegliche Teil 1 an der zur Druckfeder 3 abgewandten Seite drei Ansätze oder Finger 8 auf, die von einer ebenen Auflagefläche 9 hervorspringen bzw. über diese herausragen.

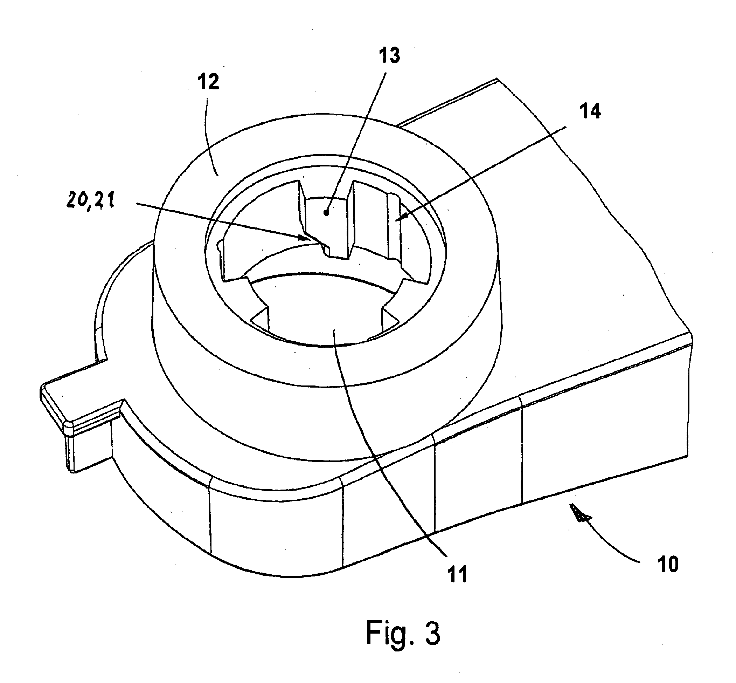

In Fig. 3 ist der feststehende Teil 10 der erfindungsgemäßen Vorrichtung dargestellt, der mit einem an einem Kraftfahrzeug angebrachten Spiegelfuß verbunden wird. Es kann jedoch auch sein, dass der feststehende Teil 10 Bestandteil eines Spiegelfußes ist. Der feststehende Teil 10 weist gleichfalls eine Öffnung 11 auf, die zur Aufnahme der Hülse 2 und der Finger oder Ansätze 8 des beweglichen Teils 1 dient. Der die Öffnung 11 umgebende Bereich des feststehenden Teils 10 ist mit einer Auflagefläche 12 versehen, an der sich das Gehäuse 4 des beweglichen Teils abstützen kann. Die Öffnung 11 weist eine Innenkontur auf, die drei radial nach innen gerichtete und über den Umfang verteilte Nasen 13 umfasst. Wie schon ausgeführt wurde, dient die Öffnung 11 dazu, sowohl die Finger 8 des beweglichen Teils als auch einen Teil der Hülse 2 aufzunehmen. Um die Finger 8 in der richtigen Stellung in Bezug auf die Nasen des feststehenden Teils 10 zu positionieren, weisen die Finger 8 und die Innenkontur der Öffnung 11 des feststehenden Teils 10 Mittel zur Vorpositionierung auf, die als axial gerichtete Rillen 14 im feststehenden Teil 10 und als axial gerichtete langgestreckte Rippe 15 an den Fingern 8 ausgebildet sind. Diese als Rillen 14 und Rippen 15 ausgebildeten Vorpositionierungskonturen weisen ein leichtes Spiel zueinander auf und sind derart positioniert, dass eine Seitenfläche des jeweiligen Fingers 8 an einer Seitenfläche der jeweiligen Nase 13 anliegen kann.

In Fig. 1 ist zu erkennen, dass die Hülse 2 an ihrem der Federmutter 6 abgewandten Ende 3 Verriegelungselemente 16 aufweist, die als Laschen ausgebildet sind und die unterschiedlichen Zwecken dienen, die weiter unten erläutert werden.

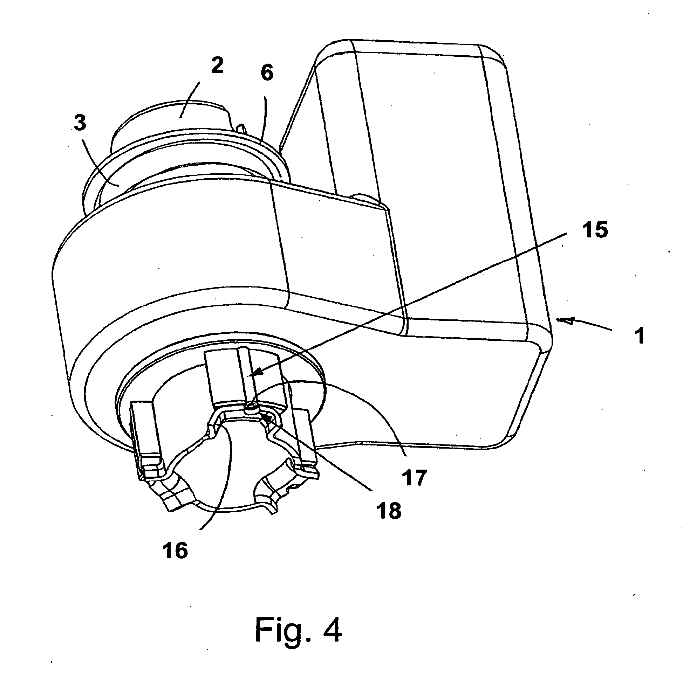

In Fig. 4 sind der bewegliche Teil 1 und die Hülse 2 in einem vormontierten Zustand dargestellt, wobei der bewegliche Teil 1 und die Hülse 2 Positionierelemente aufweisen, die den beweglichen Teil 1 und die Hülse 2 im vormontierten Zustand, der so genannten Auslieferstellung, halten. Als Positionierelemente dienen einerseits eine von der unteren Stirnfläche jedes Zahns 8 herausragende Positioniererhöhung 17 und andererseits eine teillochartige Ausnehmung 18 in der Verriegelungslasche 16 der Hülse 2. In Fig. 4 ist zu erkennen, wie die Erhöhung 17 in die Auskerbung oder Ausnehmung 18 der Verriegelungslasche 16 eingreift, um eine stirnseitige Positionierung der Bajonetthülse 2 in der Auslieferstellung zur Verfügung zu stellen. Dabei spannt die Druckfeder 3 den beweglichen Teil 1 in Bezug auf die Hülse 2 vor, d.h. die Erhöhung 17 wird in die Ausnehmung 18 der Verriegelungslaschen 16 gedrückt.

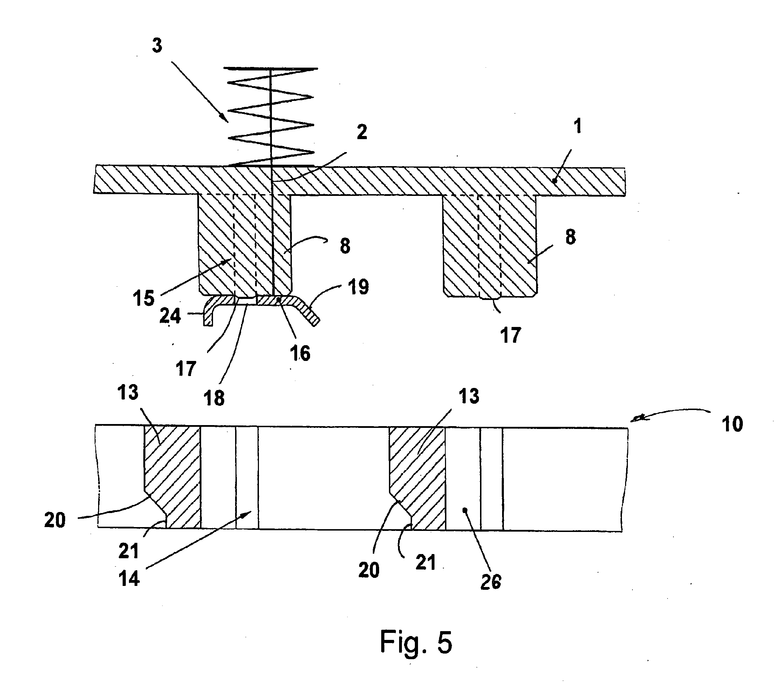

In Fig. 5 sind die zusammenzufügenden Teile der erfindungsgemäßen Vorrichtung in ihrer teilweisen Abwicklung dargestellt. Dabei ist im oberen Teil die Anordnung, bestehend aus Druckfeder 3, beweglichem Teil 1, Hülse 2 mit Verriegelungslaschen 16 in der Auslieferstellung, gezeigt, wobei Druckfeder 3 mit Hülse 2 schematisch als senkrechter Strich und zickzackförmiger Überlagerung dargestellt sind. An den Ansätzen bzw. Fingern 8 sind gestrichelt die Rippen 15 zum Vorpositionieren gezeichnet und als Verlängerung der Rippen 15 ist die stirnseitige Erhöhung 17 zur Positionierung der Bajonetthülse 2 in der Auslieferstellung erkennbar. Die Verriegelungslasche 16 weist die Ausnehmung 18 auf, in die die Erhöhung 17 eingreifen kann. Die Kraft der Feder 3 zieht die Verriegelungslaschen 16 auf die Zähne 8 und der Eingriff jeweils zwischen den Erhöhungen 17 und den Ausnehmungen 18 hält Bajonetthülse 2 und beweglichen Teil 1 in der vormontierten Stellung.

Die Verriegelungslaschen 16 sind am unteren Ende der Hülse 2 über den Umfang verteilt angeformt und sie weisen jeweils ein Mittelstück, in dem die Ausnehmung 18 vorgesehen ist und zwei Seitenstücken auf, von denen das eine 19 eine geneigte Abstützfläche und das andere 24 eine axiale Abstützfläche bildet. Unter geneigter bzw. schräger Abstützfläche 19 soll verstanden werden, dass diese Fläche in Bezug auf die Drehachse, die von der Hülse 2 gebildet wird, einen Winkel einnimmt, der zwischen 0° und ±90° liegt, wobei die Grenzen ausgeschlossen sind. Vorzugsweise liegt der Winkel zwischen ±25° und ±75°, besonders bevorzugt sind Winkel zwischen 30° und 45°, wobei die Abstützfläche 19 zum Spiegelfuß hin geneigt ist.

Im unteren Teil der Fig. 5 ist der feststehende Teil 10 teilweise in der Abwicklung dargestellt, wobei die vorspringenden Nasen 13 schraffiert gezeigt sind. Die Nasen 13 weisen ebenfalls eine Abschrägung 20 auf, die entsprechend der Abstützfläche 19 geneigt ist und eine Anschlagfläche für die Abstützfläche 19 bildet. Am unteren Ende einer Nase 13 im Anschluss an die Abschrägung 20 ist eine kurze senkrechte Stufe 21 angeordnet, deren Funktion später erläutert wird.

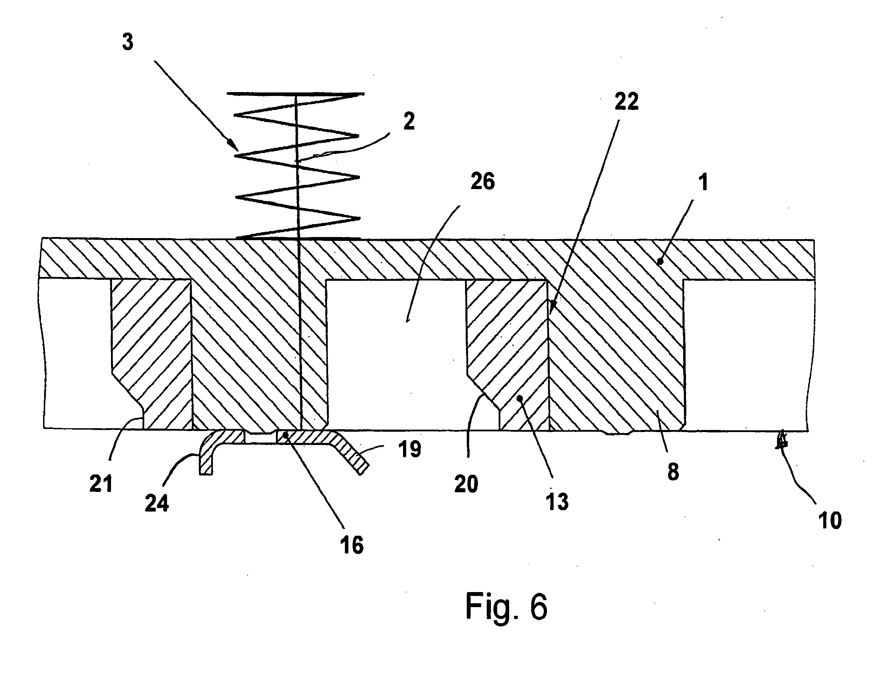

In der Innenkontur des feststehenden Teils 10 sind die axialen Rillen 14 neben den Nasen 13 in einem Abstand angeordnet, der an die Abmessungen der Zähne 8 angepasst ist, derart, dass im zusammengefügten Zustand die eine Seitenfläche der Zähne 8 an der Seitenfläche der Nasen 13 anliegt. Dies ist in Fig. 6 zu erkennen, die eine schematische Abwicklung des beweglichen und des feststehenden Teils 1, 10 zeigt, wenn diese vorpositioniert zusammengesteckt werden. Der bewegliche und der feststehende Teil 1, 10 lassen sich nur in dieser Position aufgrund der Vorpositionierungselemente, nämlich Rippen 15 mit Spiel in den Rillen 14, zusammenfügen. Dabei liegen die Seitenflächen der Nasen 13 und der Zähne 8 aneinander, d.h. sie weisen jeweils Anschlagflächen 22 auf, die die Winkelausrichtung des beweglichen Teils 1 zum feststehenden Teil 10 bestimmen. Im dargestellten Zustand befindet sich die Bajonetthülse 2 mit ihren Laschen 16 in der Auslieferstellung.

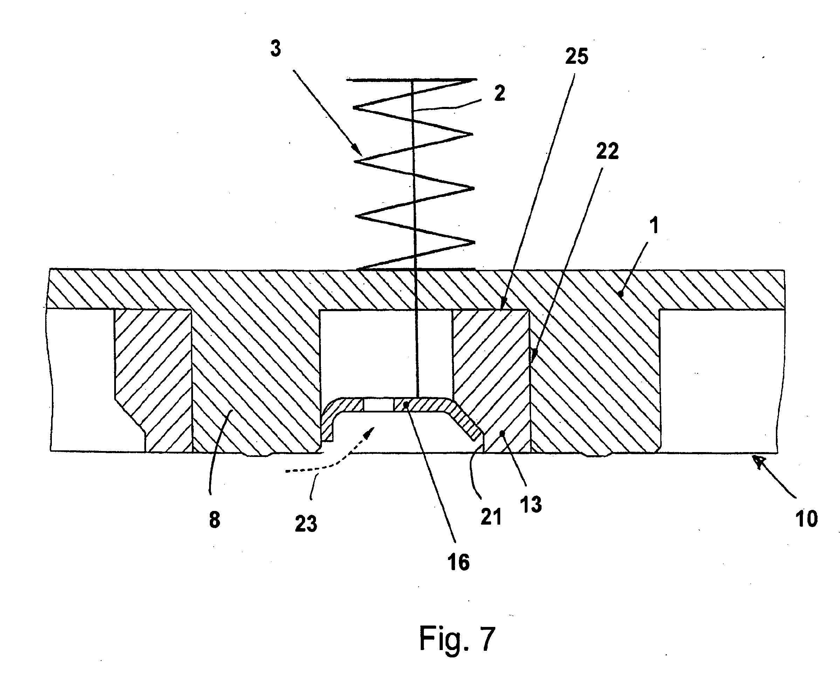

In Fig. 7 ist die erfindungsgemäße Vorrichtung im zusammengefügten Zustand dargestellt, wobei dieser Zustand derjenige ist, der in einem am Fahrzeug montierten Außenspiegel mit mechanischer Kupplung oder elektrischem Antrieb vorgesehen ist. Um diesen zusammengefügten Zustand zu erreichen, wird die Bajonetthülse 2 gedreht, wodurch die Verriegelungslaschen 16 aus ihrer Auslieferstellung entsprechend dem gestrichelten Pfeil 23 in die gespannte Stellung bewegt werden. Die Verriegelungslaschen 16 werden dabei durch die Druckfeder 2 in den Freiraum 26 zwischen den Fingern 8 des beweglichen Teils 1 und den Nasen 13 des feststehenden Teils 10 gezogen. Die geneigte Abstützfläche 19 der Verriegelungslasche 16 drückt sich an der Abschrägung 20 der Nase 13 ab und drückt den Finger 8 über die Abstützfläche 24, die an der von der Nase 13 abgewandten Seitenfläche des Fingers 8 anliegt, spielfrei an die Nase 13 des feststehenden Teils 10, wodurch eine genaue Winkelausrichtung erzielt wird. Außerdem wird der bewegliche Teil 1 durch die Druckfeder 3 an den feststehenden Teil 10 gezogen und die Anschlagflächen 25 zwischen den zwei Teilen 1, 10 bestimmen die Höhe der Teile untereinander. D.h. zwischen beweglichem Teil 1 bzw. Spiegelkopf und dem Spiegelfuß befindet sich ein Spalt, der relativ eng toleriert ist, da der Einfluss auf Ästhetik, auf Windgeräusche und auf den Verschleiß von etwaigen Dichtungen im Spalt hat. Der Spalt wird durch die Lage der Fläche 25 zur restlichen Geometrie beider Teile bestimmt.

Die senkrechte bzw. axiale Stufe 21 verhindert ein Lösen der durch die Verriegelungslaschen 16, die Nasen 13 und die Zähne 8 gebildete Bajonettverbindung, wenn sie mit einem Drehmoment beaufschlagt wird. Wird nämlich im Fehlerfall ein solches Drehmoment auf die Bajonetthülse 2 aufgebracht, kann die abgeschrägte Abstützfläche 19 der Verriegelungslasche 16 wie ein Gewindestück wirken und die Bajonetthülse 2 in die Auslieferstellung bringen, wodurch die Verbindung sich lösen würde. Die axiale Stufe 21 verhindert ein Herausschrauben, da die Verriegelungslasche 16 nach kurzer Drehung an der axialen Fläche ansteht.

Bei einer etwaigen Demontage des Außenspiegels, d.h. des beweglichen Teils 1 vom feststehenden Teil 10 muss die Bajonetthülse 2 und damit die Druckfeder 3 nach unten, d.h. in Richtung des Spiegelfußes gedrückt und verdreht werden, derart, dass die Verriegelungslaschen 16 die Stirnflächen der Zähne 8 erreichen und zumindest annähernd in die Auslieferstellung gebracht werden. Die Anordnung aus beweglichem Teil 1, Bajonetthülse 2 und Druckfeder 3 kann dann von dem feststehenden Teil 10 gelöst werden.

## Patentansprüche

1. Vorrichtung zum Einstellen eines Spiegelkopfes eines Außenspiegels für ein Fahrzeug relativ zu einem mit dem Fahrzeug verbundenen Spiegelfuß, umfassend:
einen mit dem Spiegelfuß verbindbaren feststehenden Teil (10),
einen mit dem Spiegelkopf verbindbaren, um eine Drehachse beweglichen Teil (1),
eine die Drehachse bildende Hülse (2), die in eine Öffnung (5) des beweglichen Teils (1) und eine Öffnung (11) des feststehenden Teils (10) einsetzbar ist und an einem Ende mindestens ein Verriegelungselement (16) aufweist,
eine Druckfeder (3), die den beweglichen Teil (1) und den feststehenden Teil (10) im zusammengefügten Zustand gegeneinander verspannt,
wobei der bewegliche Teil (1) mindestens einen von einer Auflagefläche (9) zum Abstützen auf dem feststehenden Teil (10) hervorspringenden Ansatz (8) aufweist, der im zusammengefügten Zustand in die Öffnung (11) des feststehenden Teils (10) eingreift, **dadurch gekennzeichnet, dass**
das Verriegelungselement (16) der Hülse (2) und die Innenkontur des feststehenden Teils (10) mindestens einen radial nach innen vorspringenden Bereich (13) aufweist und im zusammengefügten Zustand in dem nicht vorspringenden Bereich (26) der mindestens eine Ansatz (8) des beweglichen Teils (1) und das Verriegelungselement (16) derart angeordnet sind, dass sich das Verriegelungselement (16) einerseits am Ansatz (8) des beweglichen Teils (1) und andererseits am vorspringenden Bereich (13) abstützt so dass im zusammengefügten Zustand die Druckfeder (3) über das Verriegelungselement (16) sowohl eine axiale als auch eine tangentiale Kraftkomponente erzeugt, die den beweglichen Teil gegen Anschlagflächen (22, 25) des feststehenden Teils (10) einerseits zur Bestimmung der Höhe und andererseits zur Bestimmung der Winkelausrichtung des beweglichen Teils (1) und des feststehenden Teils (10) zueinander drücken.

2. Vorrichtung nach Anspruch 1, **dadurch gekennzeichnet, dass** der bewegliche Teil (1) und die Hülse (2) korrespondierende Positionierelemente (17, 18) umfassen, die eine definierte, als Auslieferstellung bezeichnete Position des beweglichen Teils (1) und der Hülse (2) zueinander vorgeben.

3. Vorrichtung nach Anspruch 1 oder Anspruch 2, **dadurch gekennzeichnet, dass** der bewegliche Teil (1) und der feststehende Teil (10) korrespondierende Mittel (14, 15) zur Vorpositionierung der Anordnung aus beweglichem Teil (1) und Hülse (2) in der Auslieferstellung und des feststehenden Teils (10) beim Zusammenfügen aufweisen.

4. Vorrichtung nach einem der Ansprüche 1 bis 3, **dadurch gekennzeichnet, dass** das Verriegelungselement (16) eine in Bezug auf die Drehachse geneigte Abstützfläche (19) und die Innenkontur bzw. der vorspringende Bereich (13) des feststehenden Teils (10) eine korrespondierende geneigte Abstützfläche (20) für die Erzeugung der tangentialen und axialen Kraftkomponenten aufweisen.

5. Vorrichtung nach einem der Ansprüche 1 bis 4, **dadurch gekennzeichnet, dass** die Innenkontur des feststehenden Teils (10) mehrere nach innen vorspringende Nasen (13) und der bewegliche Teil (1) mehrere Ansätze (8) umfassen, wobei im zusammengefügten Zustand die Ansätze (8) zwischen den Nasen (13) angeordnet sind und in einem jeweiligen Freiraum (26) zwischen Ansätzen (8) und Nasen (13) jeweils ein Verriegelungselement (16) angeordnet ist, das einerseits an einer an der Nase (13) vorgesehenen geneigten Abstützfläche (20) und andererseits an dem Ansatz (8) anliegt.

6. Vorrichtung nach einem der Ansprüche 1 bis 5, **dadurch gekennzeichnet, dass** die Druckfeder (3) die Hülse (2) umgreift und sich zwischen einer mit der Hülse (2) verbundenen Ringfläche (6) und dem beweglichen Teil (1) abstützt.

7. Vorrichtung nach einem der Ansprüche 3 bis 6, **dadurch gekennzeichnet, dass** die Mittel (14, 15) zur Vorpositionierung an dem mindestens einen Ansatz (8) des beweglichen Teils (1) und an der Innenkontur des feststehenden Teils (10) eine axial angeordnete Führungserhöhung (15) und Führungsvertiefung (14) aufweisen.

8. Vorrichtung nach einem der Ansprüche 3 bis 7, **dadurch gekennzeichnet, dass** die Mittel (14, 15) zur Vorpositionierung als an dem Ansatz (8) des beweglichen Teils (1) und an der Innenkontur des feststehenden Teils (10) angeordnete Rippe (15) und Rille (14) ausgebildet sind.

9. Vorrichtung nach einem der Ansprüche 2 bis 8, **dadurch gekennzeichnet, dass** die korrespondierenden Positionierelemente am beweglichen Teil (1) und an der Hülse (2) als Eingreiferhöhung (17) und Eingreifvertiefung (18) ausgebildet sind.

10. Vorrichtung nach Anspruch 9, **dadurch gekennzeichnet, dass** die Eingreiferhöhung (17) und die Eingreifvertiefung (18) an dem Ansatz (8) des beweglichen Teils (1) und an dem Verriegelungselement (16) der Hülse (2) angeordnet sind.

11. Vorrichtung nach einem der Ansprüche 1 bis 10, **dadurch gekennzeichnet, dass** nach dem Vorpositionieren der Anordnung aus beweglichem Teil (1) und Hülse (2) in der Auslieferstellung in Bezug auf den feststehenden Teil (10) das mindestens eine Verriegelungselement (16) nach Lösen der Positionierelemente (17, 18) des beweglichen Teils (1) und der Hülse (2) voneinander durch Rotation der Hülse (2) in den Freiraum (26) zwischen beweglichem Teil (1) und feststehendem Teil (10) bringbar ist.

12. Vorrichtung nach einem der Ansprüche 3 bis 11, **dadurch gekennzeichnet, dass** der nach innen vorspringende Bereich (13) bzw. die Nase der Innenkontur des feststehenden Teils eine sich an eine geneigte Abstützfläche (20) anschließende Stufe (21) zum Verhindern des Lösens der Verbindung zwischen feststehendem und beweglichem Teil (1, 10) im zusammengefügten Zustand, wenn ein Dreh Drehmoment auf die Hülse (2) aufgebracht wird, aufweist.

13. Vorrichtung nach einem der Ansprüche 1 bis 12, **dadurch gekennzeichnet, dass** der bewegliche Teil (1) wahlweise ein Gehäuse (4) aufweist, in dem ein elektrischer Antrieb aufgenommen ist, oder als Träger für einen Spiegelkopf mit mechanischer Kupplung ausgebildet ist.

## Claims

1. Device for adjusting a mirror head of an external mirror for a vehicle relative to a mirror base connected to the vehicle, comprising:
a stationary part (10) which is connectable to the mirror base,
a part (1) which is connectable to the mirror head and is movable about an axis of rotation,
a sleeve (2) which forms the axis of rotation, is insertable into an opening (5) in the movable part (1) and into an opening (11) in the stationary part (10) and has at least one locking element (16) at one end,
a compression spring (3) which braces the movable part (1) and the stationary part (10) against each other in the assembled state,
wherein the movable part (1) has at least one extension (8) which projects from a support surface (9) for supporting on the stationary part (10) and, in the assembled state, engages in the opening (11) in the stationary part (10) **characterized in that** the locking element (16) of the sleeve (2) and the inner contour of the stationary part (10) have at least one radially inwardly projecting region (13) and, in the assembled state, the at least one extension (8) of the movable part (1) and the locking element (16) are arranged in the non-projecting region (26) in such a manner that the locking element (16) is supported at one end on the extension (8) of the movable part (1) and at the other end on the projecting region (13) such that, in the assembled state, the compression spring (3) via the locking element (16) generates both an axial and a tangential force component, which force components press the movable part against stop surfaces (22, 25) of the stationary part (10) firstly in order to determine the height and secondly in order to determine the angular alignment of the movable part (1) and of the stationary part (10) with respect to each other.

2. Device according to Claim 1, **characterized in that** the movable part (1) and the sleeve (2) comprise corresponding positioning elements (17, 18) which predetermine a defined position, which is designated as the delivery position, of the movable part (1) and of the sleeve (2) with respect to each other.

3. Device according to Claim 1 or Claim 2, **characterized in that** the movable part (1) and the stationary part (10) have corresponding means (14, 15) for prepositioning the arrangement of movable part (1) and sleeve (2) in the delivery position and the stationary part (10) upon assembly.

4. Device according to one of Claims 1 to 3, **characterized in that** the locking element (16) has a supporting surface (19) which is inclined with respect to the axis of rotation, and the inner contour and the projecting region (13) of the stationary part (10) have a corresponding inclined supporting surface (20) for generating the tangential and axial force components.

5. Device according to one of Claims 1 to 4, **characterized in that** the inner contour of the stationary part (10) comprises a plurality of inwardly projecting lugs (13) and the movable part (1) comprises a plurality of extensions (8), wherein, in the assembled state, the extensions (8) are arranged between the lugs (13), and a locking element (16) which bears at one end against an inclined supporting surface (20) provided on the lug (13) and at the other end against the extension (8) is arranged in each case in a respective clearance (26) between extensions (8) and lugs (13).

6. Device according to one of Claims 1 to 5, **characterized in that** the compression spring (3) engages around the sleeve (2) and is supported between an annular surface (6) connected to the sleeve (2) and the movable part (1).

7. Device according to one of Claims 3 to 6, **characterized in that** the prepositioning means (14, 15) have an axially arranged guide elevation (15) and guide depression (14) on the at least one extension (8) of the movable part (1) and on the inner contour of the stationary part (10).

8. Device according to one of Claims 3 to 7, **characterized in that** the prepositioning means (14, 15) are designed as a rib (15) and groove (14) arranged on the extension (8) of the movable part (1) and on the inner contour of the stationary part (10).

9. Device according to one of Claims 2 to 8, **characterized in that** the corresponding positioning elements on the movable part (1) and on the sleeve (2) are designed as an engagement elevation (17) and engagement depression (18).

10. Device according to Claim 9, **characterized in that** the engagement elevation (17) and the engagement depression (18) are arranged on the extension (8) of the movable part (1) and on the locking element (16) of the sleeve (2).

11. Device according to one of Claims 1 to 10, **characterized in that**, after the arrangement of movable part (1) and sleeve (2) are prepositioned with respect to the stationary part (10) in the delivery position, the at least one locking element (16), after release of the positioning elements (17, 18) of the movable part (1) and of the sleeve (2) from each other, can be brought by rotation of the sleeve (2) into the clearance (26) between movable part (1) and stationary part (10).

12. Device according to one of Claims 3 to 11, **characterized in that** the inwardly projecting region (13) or the lug of the inner contour of the stationary part has a step (21) which adjoins an inclined supporting surface (20) and is intended for preventing the release of the connection between stationary and movable parts (1, 10) in the assembled state if a torque is applied to the sleeve (2).

13. Device according to one of Claims 1 to 12, **characterized in that** the movable part (1) either has a housing (4) in which an electric drive is accommodated, or is designed as a support for a mirror head with a mechanical coupling.

## Revendications

1. Dispositif pour ajuster une tête de rétroviseur d'un rétroviseur extérieur pour un véhicule par rapport à un support de rétroviseur connecté au véhicule, comportant :
une partie fixe (10) pouvant être connectée au support de rétroviseur,
une partie mobile (1) autour d'un axe de rotation et pouvant être connectée à la tête de rétroviseur,
une douille (2) formant l'axe de rotation, laquelle peut être insérée dans une ouverture (5) de la partie mobile (1) et une ouverture (11) de la partie fixe (10) et comprend au moins un élément de verrouillage (16) à une extrémité,
un ressort de compression (3) qui serre l'une contre l'autre la partie mobile (1) et la partie fixe (10) à l'état assemblé,
la partie mobile (1) comprenant au moins une saillie (8) faisant saillie à partir d'une surface d'appui (9) pour l'appui sur la partie fixe (10),
laquelle saillie s'engage, à l'état assemblé, dans l'ouverture (11) de la partie fixe (10), **caractérisé en ce que**
l'élément de verrouillage (16) de la douille (2) et le contour intérieur de la partie fixe (10) comprennent au moins une région (13) faisant saillie radialement vers l'intérieur et, à l'état assemblé, l'au moins une saillie (8) de la partie mobile (1) et l'élément de verrouillage (16) sont disposés dans la région non saillante (26), de telle sorte que l'élément de verrouillage (16) s'appuie, d'un côté, contre la saillie (8) de la partie mobile (1) et, de l'autre côté, contre la région saillante (13), de telle sorte qu'à l'état assemblé, le ressort de compression (3) génère par le biais de l'élément de verrouillage (16) à la fois une composante de force axiale et une composante de force tangentielle qui pressent la partie mobile contre des surfaces de butée (22, 25) de la partie fixe (10) d'une part pour déterminer la hauteur et d'autre part pour déterminer l'orientation angulaire de la partie mobile (1) et de la partie fixe (10) l'une par rapport à l'autre.

2. Dispositif selon la revendication 1, **caractérisé en ce que** la partie mobile (1) et la douille (2) comportent des éléments de positionnement correspondants (17, 18) qui définissent une position définie, appelée position de livraison, de la partie mobile (1) et de la douille (2) l'une par rapport à l'autre.

3. Dispositif selon la revendication 1 ou la revendication 2, **caractérisé en ce que** la partie mobile (1) et la partie fixe (10) comprennent des moyens correspondants (14, 15) pour le pré-positionnement de l'agencement constitué de la partie mobile (1) et de la douille (2) dans la position de livraison et de la partie fixe (10) lors de l'assemblage.

4. Dispositif selon l'une quelconque des revendications 1 à 3, **caractérisé en ce que** l'élément de verrouillage (16) comprend une surface d'appui (19) inclinée par rapport à l'axe de rotation et le contour intérieur ou la région saillante (13) de la partie fixe (10) comprend une surface d'appui (20) inclinée correspondante pour la génération des composantes de force tangentielle et axiale.

5. Dispositif selon l'une quelconque des revendications 1 à 4, **caractérisé en ce que** le contour intérieur de la partie fixe (10) comporte plusieurs ergots (13) faisant saillie vers l'intérieur et la partie mobile (1) comporte plusieurs saillies (8), les saillies (8) étant disposées entre les ergots (13) à l'état assemblé et un élément de verrouillage (16) étant disposé à chaque fois dans un espace libre respectif (26) entre les saillies (8) et les ergots (13), lequel élément de verrouillage s'applique, d'un côté, contre une surface d'appui (20) inclinée prévue sur l'ergot (13) et, de l'autre côté, contre la saillie (8).

6. Dispositif selon l'une quelconque des revendications 1 à 5, **caractérisé en ce que** le ressort de compression (3) s'engage autour de la douille (2) et s'appuie entre une surface annulaire (6) connectée à la douille (2) et la partie mobile (1).

7. Dispositif selon l'une quelconque des revendications 3 à 6, **caractérisé en ce que** les moyens (14, 15) de pré-positionnement sur l'au moins une saillie (8) de la partie mobile (1) et sur le contour intérieur de la partie fixe (10) comprennent un relief de guidage (15) disposé axialement et un évidement de guidage (14).

8. Dispositif selon l'une quelconque des revendications 3 à 7, **caractérisé en ce que** les moyens (14, 15) de pré-positionnement sont réalisés sous forme de nervure (15) et de rainure (14) disposées sur la saillie (8) de la partie mobile (1) et sur le contour intérieur de la partie fixe (10).

9. Dispositif selon l'une quelconque des revendications 2 à 8, **caractérisé en ce que** les éléments de positionnement correspondants sur la partie mobile (1) et sur la douille (2) sont réalisés sous forme de relief d'engagement (17) et d'évidement d'engagement (18).

10. Dispositif selon la revendication 9, **caractérisé en ce que** le relief d'engagement (17) et l'évidement d'engagement (18) sont disposés sur la saillie (8) de la partie mobile (1) et sur l'élément de verrouillage (16) de la douille (2).

11. Dispositif selon l'une quelconque des revendications 1 à 10, **caractérisé en ce qu'**après le pré-positionnement de l'agencement constitué de la partie mobile (1) et de la douille (2) dans la position de livraison par rapport à la partie fixe (10), l'au moins un élément de verrouillage (16) peut être amené, après le détachement l'un de l'autre des éléments de positionnement (17, 18) de la partie mobile (1) et de la douille (2), par rotation de la douille (2), dans l'espace libre (26) entre la partie mobile (1) et la partie fixe (10).

12. Dispositif selon l'une quelconque des revendications 3 à 11, **caractérisé en ce que** la région (13) faisant saillie vers l'intérieur ou l'ergot du contour intérieur de la partie fixe comprend un gradin (21) se raccordant à une surface d'appui inclinée (20) pour empêcher le détachement de la connexion entre les parties fixe et mobile (1, 10) à l'état assemblé, si un couple est appliqué à la douille (2).

13. Dispositif selon l'une quelconque des revendications 1 à 12, **caractérisé en ce que**, de manière sélective, la partie mobile (1) comprend un boîtier (4) dans lequel est reçu un entraînement électrique, ou est réalisée en tant que support pour une tête de rétroviseur comprenant un accouplement mécanique.
